# EUROPEAN PATENT SPECIFICATION

(11) **EP 2 913 264 B1**
(45) Date of publication and mention of the grant of the patent: **02.06.2021**
(21) Application number: 14157274.3
(22) Date of filing: 28.02.2014
(51) Int. Cl.: B64C 1/06, B64C 1/12, B64C 3/26, B64F 5/00

(54) **Crack retardation by laser shock peening**
Rissverzögerung durch Laserschockstrahlen
Retardement de fissure par martelage par choc laser

(43) Date of publication of application: 02.09.2015
(73) Proprietor: Airbus Operations GmbH, 21129 Hamburg (DE); Airbus Defence and Space GmbH, 82024 Taufkirchen (DE)
(72) Inventor: Furfari, Domenico, 22589 Hamburg (DE); Hombergsmeier, Elke, 85659 Forstern (DE)
(74) Representative: LKGLOBAL Lorenz & Kopf PartG mbB Patentanwälte

(56) References cited:
- EP-A1- 1 752 547
- WO-A1-2010/063643
- US-A- 5 842 317
- US-A1- 2002 050 157

## Description

### TECHNICAL FIELD

The present invention relates to crack retardation with Laser Shock Peening. In particular, the present invention relates to an aircraft, the use of Laser Shock Peening for treating a skin of an aircraft as well as to a method for reducing the crack growth on a skin of an aircraft.

### TECHNICAL BACKGROUND

Nowadays, crack growth rates in aircraft structures can be reduced either by using high damage tolerant materials such as ARALL® and GLARE® or adopting design features such as bonded crack retarders or crenellations. Such advanced material can be expensive in particular with regard to the production costs. Moreover, placing bonded straps across the crack path may result in high manufacturing costs, for example, in long lead time for surface preparation for bonding, curing cycle, etc. Furthermore, the assembly costs of substructures such as stringers, frames and ribs may increase because of additional assembly steps that are necessary to cope with the increased skin thickness at the reinforcement locations.

Investigations to apply crack stoppers or retarders are described in Xiang Zhang, Phil Irving, Marco Boscolo, Douglas Figueroa-Gordon, Giuliano Allegri; "Fail Safety of Integral Metallic Structures Reinforced by Bonded Crack Retarders"; Cranfield University, UK, 2006 and in M.-V. Uz, M. Koçak, F. Lemaitre, J.-C. Ehrström, S. Kempa, F. Bron, "Improvement of Damage Tolerance of Laser Beam Welded Stiffened Panels for Airframes via Local Engineering"; Int. Journal of Fatigue, 2008.

DE 10 2008 044 407 A1 and US 2011/0290770 A1 disclose a method for irradiating an aircraft component having a damaged spot, which is carried out during maintenance on the aircraft. In this context, an area of the aircraft structural part close to the damaged spot is treated using a pulsed laser beam. Meanwhile, a compression wave propagates through the irradiated area of the aircraft structural part and produces a compressive bias in this area.

US 2002/0050157 A1 relates to a panel, e.g. intended for an aircraft wing panel, which has continuous ribs extending on one surface. The panel is formed, or given a dihedral bend, by shot peening the ribs at a V-shaped section to expand the V-shaped sections and thus deform the panel.

### SUMMARY OF THE INVENTION

It is an object of the invention to extend maintenance intervals and to enhance the damage tolerance of aircrafts.

This object is solved by the subject-matter of the independent claims. Developments and embodiments may be taken from the dependent claims, the description, and the figures.

A first aspect of the invention relates to an aircraft comprising two adjacent frames or ribs and a skin of the aircraft that is attached to the two adjacent frames or ribs. A portion of the skin is located between the two adjacent frames or ribs and comprises a first crack retarding region and a second crack retarding region that are separate from each other. Moreover, each of the first and second crack retarding regions is induced by Laser Shock Peening and comprises compressive residual stresses.

The scope of the invention may thus be seen in slowing down the propagation of cracks in the skin of an aircraft by providing at least two separate regions that are treated by Laser Shock Peening onto the skin between two adjacent frames or ribs. Laser Shock Peening can provide a significant increase in fatigue life due to a much slower crack propagation behavior during typical in service loading conditions (for both, constant amplitude and variable amplitude) in the area of applied compressive residual stresses compared to the untreated specimens. In this way, the propagation of cracks in the aircraft skin can be slowed down such that the service intervals of aircrafts can be extended.

The two adjacent frames or ribs may describe primary structural elements of the aircraft. For example, the aircraft may comprise two adjacent circumferential frames. The wings of the aircraft may, for example comprise two adjacent ribs. The skin of the aircraft may also be understood as an outer cover of the aircraft, for example, the outer cover of the fuselage, the wings, the horizontal stabilizer, and the vertical stabilizer. The attachment of the skin to the two adjacent frames or ribs can be in form of rivets or other means of attachment.

The first and second crack retarding region of the portion of the skin that is located between the two adjacent frames or ribs may design a region of said skin portion that is treated by Laser Shock Peening. The crack retarding region refers to a region that is treated by Laser Shock Peening and that slows down the crack growth in the aircraft skin. Laser Shock Peening induces compressive residual stresses into the material and is described in more detail with respect to the exemplary embodiments. The Laser Shock Peening treatment has the positive effect of extending the service life of the treated material. Moreover, Laser Shock Peening can be applied at different manufacturing stages. It may also be applied on an aircraft that is already in service. Under the feature that each of the first and second crack retarding regions comprises compressive residual stresses, one may understand that the aircraft skin material comprises compressive residual stresses in the first and second crack retarding regions. These crack retarding regions have a longitudinal extension. For example, the crack retarding regions may be formed as longitudinal stripes. This longitudinal crack retarding regions may be aligned to be perpendicular to the typical crack growth direction. The compressive residual stresses have the largest value perpendicular to the crack extension direction, in direction of the longitudinal extension of the crack retarding regions. Under the feature that the first crack retarding region and the second crack retarding region are separate from each other, one can understand that there is a distance between the first crack retarding region and the second crack retarding region. For example, the first crack retarding region and the second crack retarding region are parallel to each other and have a certain distance to each other.

The first and second crack retarding regions may be aligned under certain angle to each other, e.g. 30°, 45°, 60° or 90°. They may also be aligned to be parallel to each other. Moreover, the first and second crack retarding regions may be formed as circles that are aligned around a crack initiation point. The crack retarding regions may further be aligned perpendicular to a typical crack growth direction, e.g., parallel or perpendicular to the longitudinal direction of the fuselage or wing of the aircraft.

Laser Shot Peening can be used for treating different metals. For example, laser shot peening can be applied to an aircraft skin made of an aluminum alloy. For thick materials having a notch and, e.g., a thickness of 10 mm the Laser Shock Peening treatment can be applied from three sides around the whole notch radius. The objective can be to use maximum deep compressive residual stresses to decelerate the propagating crack as long, and as much as possible. For thin fuselage products in the range of 2 mm thickness the Laser Shock Peening treatment can be applied as crack retardation stripes perpendicular to the crack propagation direction.

Laser Shock Peening can induce a significant layer of beneficial compressive residual stresses several millimeters underneath the surface of metal components to help them better resist the detrimental effects of fatigue. The compressive residual stresses may also reach through more than several millimeters underneath the surface. For example, the compressive residual stresses may be provided over the whole thickness of the material (e.g. of the skin). This can have obvious benefits for extending the service life of metallic components at the manufacturing stage but it may also be possible to apply this technique to in-service aircraft to extend the service goals of existing structures.

According to an exemplary embodiment of the invention, the parameters for the Laser Shock Peening are selected from the group consisting of a laser power density amounting to 0.5 GW/cm² to 15 GW/cm², a laser pulse duration amounting to 5 ns to 30 ns, 1 to 10 layers of Laser Shock Peening treatment, and any combination thereof.

In this way, the laser may be configured for inducing crack retarding regions having compressive residual stresses onto the aircraft skin by Laser Shot Peening.

According to another exemplary embodiment of the invention, the compressive residual stresses in each of the first and second crack retarding regions amount to 50 MPa to 1700 MPa. For example, compressive residual stresses for aluminum alloys are between 50 Mpa and 600 MPa and for Ti alloys as well as for High Strength Steel between 100 Mpa and 1700 Mpa.

It has to be noted that the specific size of the compressive residual stresses depends on the material and on the thickness of the material. Having such compressive residual stresses may lead to an effective reduction of crack propagation in the aircraft skin.

According to another exemplary embodiment of the invention, each of the first and second crack retarding regions is induced by Laser Shock Peening from an inner side and from an outer side of the aircraft skin.

In other words, the residual stresses can be induced from both sides of the aircraft skin. In this way, the residual stresses may be distributed over the thickness of the aircraft skin.

According to another exemplary embodiment of the invention, the compressive residual stresses in the first and second crack retarding region reach through the complete thickness of the aircraft skin.

In other words, the compressive residual stresses in the first and second crack retarding region are distributed over the whole thickness of the aircraft skin. In this way, the crack growth reduction may be more effective.

According to another exemplary embodiment of the invention, the first and second regions are further treated by shot peening.

Shot peening can be used to improve the fatigue life, the resistance to stress corrosion cracking and/or to fretting fatigue. This surface treatment solution can be done by throwing beads onto a specific area of the component to be peened. It can introduce beneficial compressive residual stresses close to the surface, which can guarantee an increased lifetime of the component. The specimens can be first laser shock peened in a limited area and then be shot peened all around besides the clamping area. In this way, the crack retardation can be further enhanced. The combination of Laser Shock Peening and Shot Peening can be very effective for reducing the creation of fatigue cracks and for slowing down crack growth. For example, the crack growth for free edges, external small radii or external chamfers may be slowed down.

According to another exemplary embodiment of the invention, the shot peening parameters are selected from the group consisting of blasting agents having a cross section of 0.1 mm to 2 mm, a peening intensity amounting to 0.2 mmA to 0.35 mmA, and any combination thereof.

According to another exemplary embodiment, the first and second separate crack retarding regions are configured as first and second parallel stripes.

For example, the first and second stripes are aligned to be parallel to a longitudinal direction or to a circumferential direction of the fuselage or the wing of the aircraft. In this way, crack growth can be most effectively slowed down in a direction that is perpendicular to the first and second stripes.

According to another exemplary embodiment of the invention, the first and second stripes have a width between 5 mm and 25 mm or between 25 mm and 60 mm, preferably between 8 mm and 22 mm or between 28 mm and 55 mm, more preferably having a width of 10mm, 20mm, 35mm or 50mm. Moreover, the first and second stripes have a distance between 10mm and 100 mm, preferably between 15 mm and 50 mm, more preferably a distance of 20 mm.

According to another exemplary embodiment of the invention, the aircraft further comprises two adjacent stringers. The portion of the skin is further located between the two adjacent stringers. Moreover, the portion of the skin further comprises a third crack retarding region and a fourth crack retarding region that are separate from each other. Each of the third and fourth crack retarding regions is induced by Laser Shock Peening and comprises compressive residual stresses. Moreover, the first and second crack retarding regions are aligned to be parallel to the two adjacent frames or ribs and the third and fourth crack retarding regions are aligned to be parallel to the two adjacent stringers.

In other words, the first and second crack retarding region are aligned in a circumferential direction of the fuselage or wing of the aircraft and the third and fourth crack retarding region are aligned in a longitudinal direction of the fuselage or wing of the aircraft. It has to be noted, that the features that are described with respect to the first and second crack retarding regions also apply for the third and fourth crack retarding regions. In this way, a network of crack retarding regions can be applied to the aircraft skin. This allows slowing down the crack growth in a large area of the skin of the aircraft.

According to another exemplary embodiment of the invention, the skin of the aircraft is an alloy skin.

For example, the skin of the aircraft is an aluminum alloy skin.

According to another exemplary embodiment of the invention, the thickness of the skin amounts from 1 mm to 20 mm, preferably from 1 mm to 3 mm, more preferably the thickness amounts to 2 mm. For fuselage structures the thickness preferably amounts from 1 mm to 3 mm, more preferably the thickness amounts to 2 mm. For wing structures the width preferably amounts from 3 mm to 20 mm, more preferably the thickness amounts to 6 mm to 8 mm.

According to another exemplary embodiment of the invention, the two frames are comprised by a fuselage of the aircraft, or the two ribs are comprised by a wing, a horizontal stabilizer, or a vertical stabilizer of the aircraft.

In this way, the whole skin of the aircraft, i.e. the skin of the fuselage, wings and stabilizers, can be provided with crack retarding regions such that the retardations of cracks can be provided for the whole aircraft skin.

A second aspect of the invention relates to the use of Laser Shock Peening for treating a skin of an aircraft for reducing the crack growth in the aircraft skin. Hereby, the aircraft comprises two adjacent frames or ribs and a skin attached to the two adjacent frames or ribs. Moreover, a portion of the aircraft skin is located between the two adjacent frames or ribs and comprises a first crack retarding region and a second crack retarding region that are separate from each other. In addition, each of the first and second crack retarding regions is induced by Laser Shock Peening and comprises compressive residual stresses.

Hereby, features and advantages that are described with respect to the aircraft also apply to the use of Laser Shock Peening for treating a skin of an aircraft.

A third aspect of the invention relates to a method for reducing the crack growth in a skin of an aircraft. The method comprises the step of providing an aircraft comprising a first frame or rib, a second frame or rib, and a skin attached to the first and second frame or rib. Moreover, the method includes the steps of inducing a first crack retarding region comprising compressive residual stresses in a portion of the skin located between the first and second frame or rib by Laser Shock Peening and inducing a second crack retarding region comprising compressive residual stresses in the skin located between the first and second frame or rib by Laser Shock Peening.

Hereby, features that are described with respect to the aircraft also apply to the method for reducing crack growth on a skin of an aircraft. The steps of the method can be carried out in the order described or in another order or even parallel to each other. For example, the crack retarding regions can be applied to the aircraft skin before or after the aircraft is assembled together.

The aspects described above and further aspects, features and advantages of the invention may also be found in the exemplary embodiments which are described in the following with reference to the appended drawings.

### BRIEF DESCRIPTION OF THE DRAWINGS

Fig. 1 shows the treatment of Laser Shock Peening according to an exemplary embodiment of the invention.
Fig. 2 shows a portion of an aircraft skin according to an exemplary embodiment of the invention.
Fig. 3A shows a cross-section of an aircraft skin according to an exemplary embodiment of the invention.
Fig. 3B shows a cross-section of an aircraft skin according to an exemplary embodiment of the invention.
Fig. 4A shows a portion of an aircraft skin having crack retarding regions according to an exemplary embodiment of the invention.
Fig. 4B shows a portion of an aircraft skin having crack retarding regions according to an exemplary embodiment of the invention.
Fig. 4C shows a portion of an aircraft skin having crack retarding regions according to an exemplary embodiment of the invention.
Fig. 5 shows an aircraft according to an exemplary embodiment of the invention.
Fig. 6 shows a flow-chart diagram relating to a method according to an exemplary embodiment of the invention.

If in different figures the same reference signs are used, they may denote the same or similar elements. However, the same or similar elements may also be denoted by means of different reference signs.

### DETAILED DESCRIPTION OF EXEMPLARY EMBODIMENTS

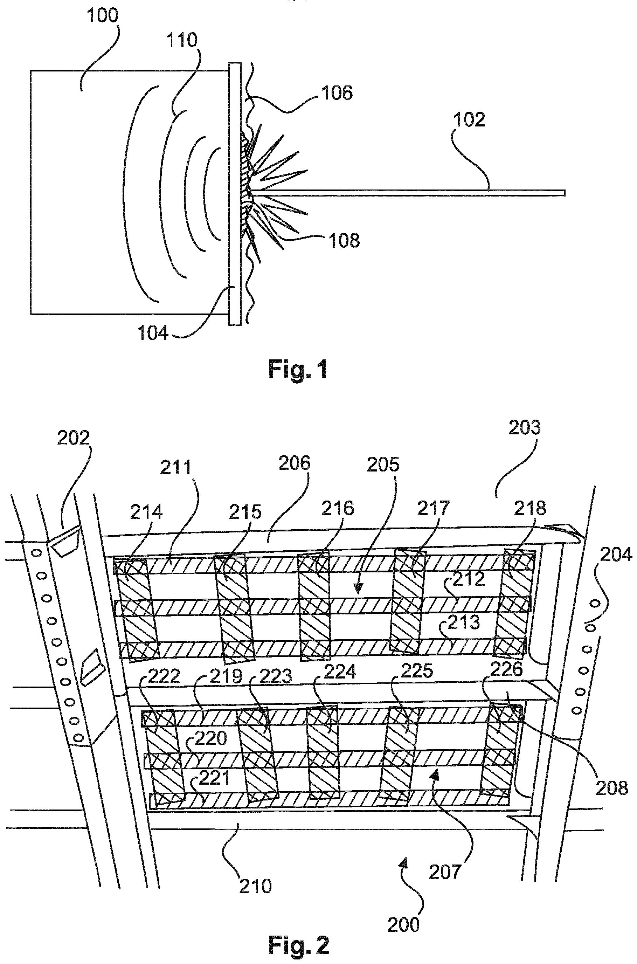

Fig. 1 shows the process of Laser Shock Peening according to an exemplary embodiment of the invention. A cross-section of a component 100 to be treated by Laser Shock Peening is shown. The surface of the component 100 is overlaid with an opaque overlay 104, for example, paint or tape. In addition, the surface of the component 100 also comprises a transparent overlay 106, for example, a thin film of flowing water. In order to induce compressive residual stresses, a laser pulse 102 is shot onto the component. In the region where the laser pulse 102 hits onto the component 100, a confined plasma 108 is created by evaporation or sublimation of the opaque overlay 104. The plasma 108 may induce an explosive force which causes shockwaves 110 in the component 100. These shockwaves 110, again, result in compressive residual stresses in the region that is treated with the laser 102.

In Laser Shock Peening, the laser beam 102 can be used to drive a high amplitude shockwave onto the component 100 surface using a high energy pulsed laser. When the peak of the pressure of the shockwave is greater than the dynamic yield strength of the material, mechanical local plastic deformations can be produced which induce a compressive residual stress field through the thickness of the material. The laser peening treatment can be addressed at some distance perpendicular to a crack growth path direction in order to achieve a residual stress field needed to reduce the crack propagation rates. In order to have a uniform compressive residual stress field through the whole thickness of the component 100, the Laser Shock Peening treatment can be performed with a certain overlap degree. In other words, several layers of Laser Shock Peening treatment can be applied onto the component 100. Moreover, it is also possible to treat both sides of the component 100 by means of Laser Shock Peening. In this way, it is possible to achieve a compression through the whole thickness of the component 100.

In Fig. 2, a part 200 of an aircraft fuselage is shown from the inside. The fuselage 200 comprises two adjacent frames 202 and 204 as well as three longitudinal stringers 206, 208, and 210. The frames 202 and 204 are aligned in a circumferential direction of the aircraft fuselage. The reference sign 205 designates a portion of the aircraft skin 203 that is located between the two adjacent frames 202 and 204 as well as between the two adjacent stringers 206 and 208. Equally, the reference sign 207 designates a portion of the aircraft skin 203 that is located between the two adjacent frames 202 and 204 as well as between the two adjacent stringers 208 and 210. The portion 205 of the aircraft skin 203 comprises different crack retarding regions 211-218. The crack retarding regions 211, 212 and 213 are configured as stripes that are aligned to be longitudinal with respect to the aircraft fuselage and the crack retarding regions 214, 215, 216, 217 and 218 are configured to be aligned to be circumferential with respect to the aircraft fuselage. Equally, the portion 207 comprises crack retarding regions 219-226. It can be gathered that the crack retarding regions 211-226 are aligned in a network and are evenly distributed over the skin of the aircraft. In this way, the crack propagation in any direction is slowed down in a large area of the skin. In particular, the crack propagation in the longitudinal direction as well as the crack propagation in the circumferential direction of the aircraft fuselage is slowed down. The same also applies for crack retarding regions that are applied to a wing or a stabilizer of the aircraft.

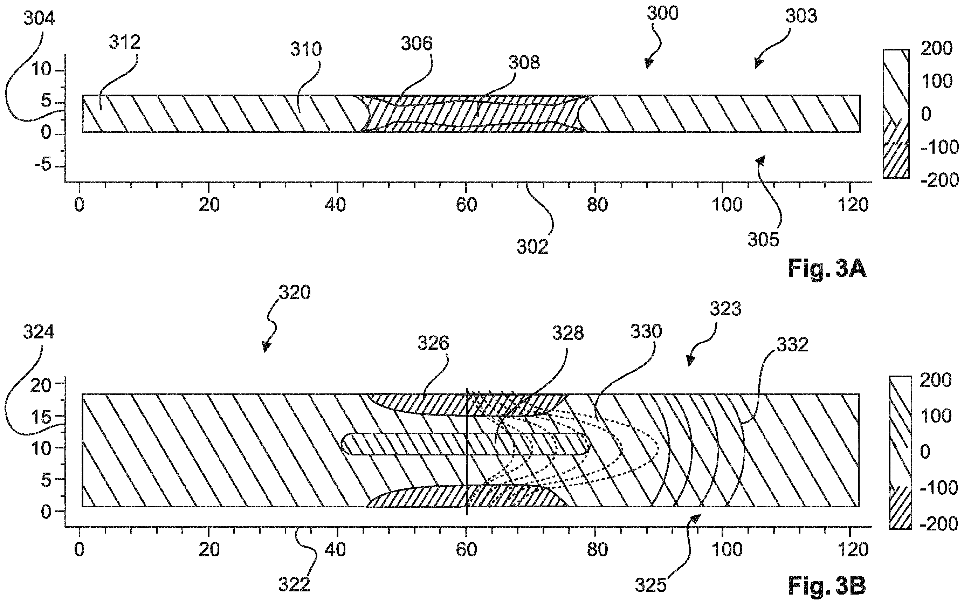

In Figs. 3A and 3B, a cross-section of a portion of an aircraft skin is shown, according to exemplary embodiments of the invention. This portion of the aircraft skin can be located between two adjacent frames or ribs. Moreover, residual stresses in the skin of the aircraft are shown.

The residual stresses shown can be measured by Incremental Centre Hole Drilling Method (ICHD) to obtain a thickness profile. In this exemplary embodiment, the specimen possess maximal compressive residual stresses in a range between 250 MPa and 300 MPa in loading direction (perpendicular to crack propagation direction) at a depth of about 0.1 mm. In the center of the specimen the compressive residual stresses can be in a range of 50 MPa to 100 MPa.

In Fig. 3A, a cross-section of an aircraft skin 300 is depicted. The aircraft skin 300 comprises an inner side 305 and an outer side 303. The axis 302 denotes an extension of the aircraft skin that is parallel to the surface of the aircraft skin. The axis 304 denotes a direction along the depth of the aircraft skin 300. In this exemplary embodiment, the aircraft skin 300 has a thickness of 6.36 mm. Moreover, different regions having different compressive residual stresses that are induced by Laser Shock Peening are depicted. In the region 306 compressive residual stresses are provided that are in the range between 150 MPa and 250 MPa. In the region 308, the compressive residual stresses are around 100 MPa. In the region 310, next to the region with the compressive residual stresses, slight tensile residual stresses are apparent in the material. This tensile residual stresses amount to 50 to 100 MPa. In the region 312 that is further away from the regions 306 and 308, there are no compressive or tensile residual stresses. This stresses are, for example, applied from both sides 303 and 305 by Laser Shock Peening.

In Fig. 3B, a cross-section of an aircraft skin 320 having a thickness of 20 mm is shown. The aircraft skin 320, again, comprises an inner side 325 and an outer side 323. The axis 322 designates a direction along the surface of the aircraft skin 320 and the axis 324 denotes a direction along the depth of the aircraft skin 320. In Fig. 3B it is shown that in the surface region 326, compressive residual stresses are provided that are in the range between 150 MPa and 250 MPa. In the central region 328, however, slight tensile residual stresses in the region of 150 MPa are present. The fact that the compressive residual stresses do not reach through the complete thickness of the aircraft skin 320 may be because of the thickness of the aircraft skin amounting to 20 mm. Despite that the compressive residual stresses do not reach through the complete material, the propagation of cracks can be slowed down. the lines 332 show how a crack front is propagating in case the skin is not treated with Laser Shock Peening and comprises no compressive residual stresses. The lines 330 show how the crack front is propagating in presence of the compressive residual stresses shown.

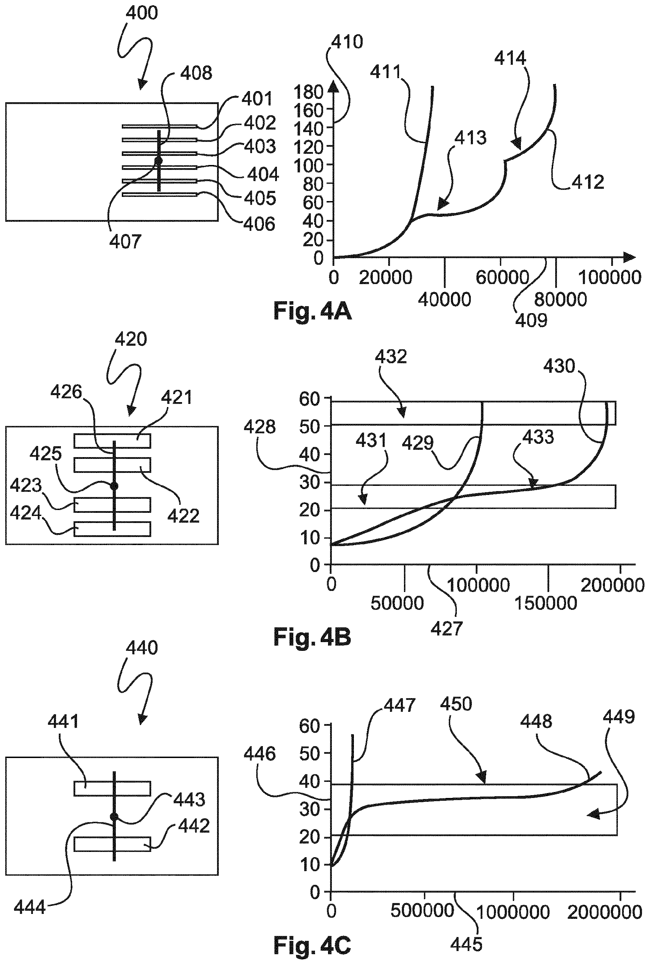

In Figs. 4A, 4B and 4C, different configurations of crack retarding regions on a portion of an aircraft skin are shown. Moreover, the propagation of a crack as a function of the number of load cycles is depicted in the diagram on the right hand side.

In Fig. 4A, a portion of an aircraft skin 400 having 6 parallel crack retarding regions formed as stripes 401-406 is depicted. Each stripe 401-406 is applied by means of Laser Shock Peening. The separation of each stripe to adjacent stripes is 40 mm. A crack starts at the point 407 and travels along the direction 408. On the right-hand side a diagram with an axis 409 denoting the number of load cycles and an axis 410 denoting the size of the crack is shown. The curve 411 shows the crack length in function of the loading cycles if no crack retarding regions are applied to the material. The curve 412 shows the behavior of the crack length in function of the load cycles if the crack retarding regions 401-406 are provided. It can be gathered, that in the regions 413 and 414, the crack retarding regions 403 and 402 severely reduce the crack growth such that the number of loading cycles that can be applied to the aircraft skin 400 can be doubled in order to end up the same crack length compared to an aircraft skin having no crack retarding regions.

In Fig. 4B, an aircraft skin 420 having four crack retarding regions 421, 422, 423 and 424 in form of four parallel stripes are shown. The stripes 421-424 have a width of 10 mm, and a length of 100 mm. The stripes 421 and 422 have a distance to each other of 22 mm and the stripe 422 has a distance from the starting point 425 of the crack of 18 mm. The crack starts at the starting point 425 and travels along the direction 426. In the diagram, the length of the crack 428 is shown as a function of the load cycles 427. The regions 431 and 432 correspond to the crack retarding regions 422 and 421. The curve 429 depicts the behavior of the crack length as a function of the load cycles if no crack retarding region is provided. The curve 430 depicts the behavior of the crack length if the four crack retarding regions 421-424 are provided. It can be gathered that in the region 433 the crack growth is severely slowed down because of the crack retarding region such that the number of load cycles that can be applied to the aircraft skin 420 in order to obtain a crack length that is similar to the crack length of the untreated aircraft skin can be doubled.

In Fig. 4C, an aircraft skin 440 having two crack retarding regions 441 and 442 is shown. The crack retarding regions 441 and 442 have a width of 20 mm and a length of 100 mm. The crack initiates at the starting point 443 and travels along the direction 444. The starting point 443 has a separation of 20 mm from the crack retarding region 441. In the diagram on the right-hand side, the behavior of the crack length 446 is shown as a function of the number of load cycles 445. The curve 447 depicts the behavior of the crack length if no crack retarding region is provided. The curve 448 depicts the behavior of the crack length if the crack retarding regions 441 and 442 are provided. The region 449 depicts the crack retarding region 441. It can be gathered that in the region 450, the crack propagation can be severely slowed down such that the number of load cycles that can be applied to the aircraft skin 440 can be multiplied.

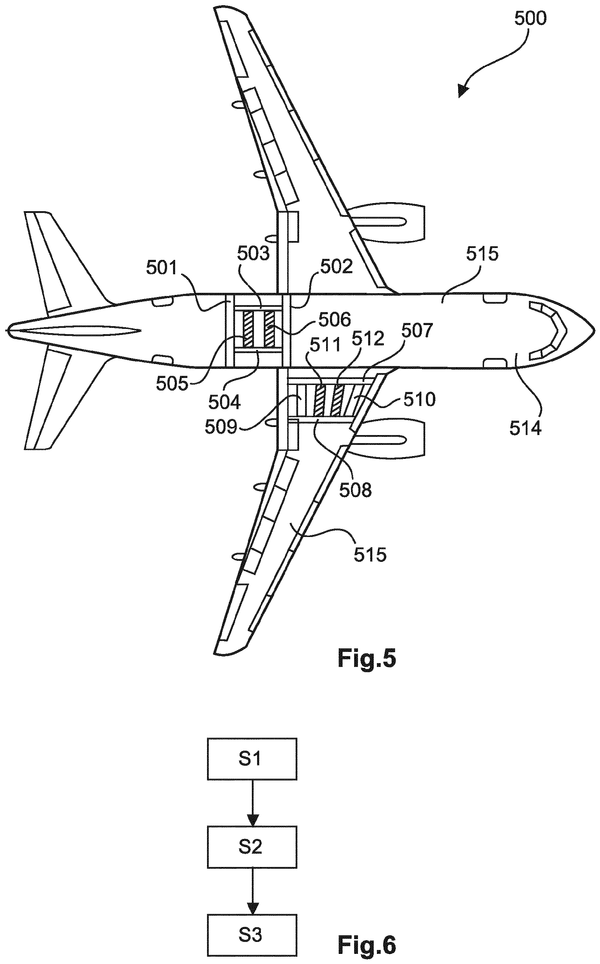

In Fig. 5, an aircraft 500 according to an exemplary embodiment of the invention is shown. The aircraft comprises a fuselage 514 and a wing 515. The fuselage 514 comprises primary structural elements in form of two adjacent frames 501 and 502 as well as two adjacent stringers 503 and 504. The skin of the fuselage 513 is attached to the frames and stringers 501-504. In the region of the skin 513 between the stringers 503 and 504 and between the frames 501 and 502, the skin 513 comprises crack retarding regions 505 and 506. The wing of the aircraft comprises ribs 507 and 508 as well as stringers 509 and 510. The portion of the aircraft skin 513 that is located between the ribs 507 and 508 as well as between the stringers 509 and 510 comprises two crack retarding regions 511 and 512.

In this way, the crack growth can be slowed down in different regions of the aircraft skin.

In Fig. 6, a flow-chart relating to a method for reducing the crack growth in a skin of an aircraft is shown. The method comprises the step S1 of providing an aircraft comprising a first frame or rib, a second frame or rib, and a skin attached to the first and second frame or rib. Moreover, the method comprises the step of inducing a first crack retarding region with compressive residual stresses in a portion of the skin located between the first and second frame or rib by Laser Shock Peening. In addition, the method comprises the step S3 of inducing a second crack retarding region with compressive residual stresses in the portion of the skin located between the first and second frame or rib by Laser Shock Peening. The crack retarding regions may be induced onto the skin first before the skin is attached to the frames or ribs. Subsequently, the frames or ribs may be assembled. Alternatively, the crack retarding regions may be induced on panels that are already assembled, i.e. panels that comprise a skin plus frames or ribs.

In the claims, the word "comprising" does not exclude other elements or steps and the indefinite article "a" or "an" does not exclude a plurality. The mere fact that certain measures are recited in mutually different dependent claims does not indicate that a combination of these measures cannot be used to advantage. The reference numerals in the claims are not intended to restrict the scope of the claims.

## Claims

1. An aircraft (500), comprising
two adjacent frames or ribs (202, 204);
a skin (203) of the aircraft attached to the two adjacent frames or ribs;
wherein a portion (205) of the skin is located between the two adjacent frames or ribs and comprises a first crack retarding region (214) and a second crack retarding region (215) that are separate from each other;
wherein each of the first and second crack retarding regions (214, 215) is induced by Laser Shock Peening and comprises compressive residual stresses (306, 308, 326);
**characterized in that** each of the first and second crack retarding regions has a longitudinal extension; and
wherein the compressive residual stresses of each of the first and second crack retarding regions are largest along the direction of the longitudinal extension.

2. The aircraft (500) according to any one of the preceding claims,
wherein each of the first and second crack retarding regions (214, 215) is induced by Laser Shock Peening from an inner side (305) and from an outer side (303) of the aircraft skin.

3. The aircraft (500) according to any one of the preceding claims,
wherein the compressive residual stresses (306, 308, 326) in the first and second crack retarding region (214, 215) reach through the complete thickness of the aircraft skin.

4. The aircraft (500) according to any one of the preceding claims,
wherein the first and second region are further treated by shot peening.

5. The aircraft (500) according to any one of the preceding claims,
wherein the first and second separate crack retarding regions (214, 215) are configured as first and second parallel stripes.

6. The aircraft (500) according to claim 5,
wherein the first and second stripes (214, 215) have a width between 5 mm and 25 mm or between 25 mm and 60 mm, preferably between 8 mm and 22 mm or between 28 mm and 55 mm, more preferably the first and second stripes have a width of 10 mm, 20 mm, 35 mm or 50 mm; and
wherein the first and second stripes (214, 215) have a distance between 10mm and 100 mm, preferably between 15 mm and 50 mm, more preferably the first and second stripes have a distance of 20 mm.

7. The aircraft (500) according to any one of the preceding claims, the aircraft further comprising:
two adjacent stringers (206, 208);
wherein the portion of the skin (205) is further located between the two adjacent stringers;
wherein the portion of the skin further comprises a third crack retarding region (211) and a fourth crack retarding region (212) that are separate from each other;
wherein each of the third and fourth crack retarding regions is induced by Laser Shock Peening and comprises compressive residual stresses; and
wherein the first and second crack retarding (214, 215) regions are aligned to be parallel to the two adjacent frames or ribs (202, 204) and the third and fourth crack retarding regions (211, 212) are aligned to be parallel to the two adjacent stringers.

8. The aircraft (500) according to any one of the preceding claims,
wherein the skin (203) of the aircraft is an alloy skin.

9. The aircraft (500) according to any one of the preceding claims,
wherein the thickness of the skin amounts to 1 mm to 20 mm, preferably to 1 to 3 mm, more preferably to 2 mm.

10. The aircraft (500) according to any one of the preceding claims,
wherein the two frames (501, 502) are comprised by a fuselage (513) of the aircraft; or
wherein the two ribs (507, 508) are comprised by a wing (515) of the aircraft.

11. The use of Laser Shock Peening for treating a skin (203) of an aircraft (500) for reducing the crack growth in the skin of the aircraft,
wherein the aircraft comprises two adjacent frames or ribs (202, 204) and a skin (203) attached to the two adjacent frames or ribs;
wherein a portion (205) of the aircraft skin (203) is located between the two adjacent frames or ribs (202, 204) and comprises a first crack retarding region (214) and a second crack retarding region (215) that are separate from each other;
wherein each of the first and second crack retarding regions (214, 215) is induced by Laser Shock Peening and comprises compressive residual stresses (306, 308, 326);
wherein each of the first and second crack retarding regions has a longitudinal extension; and
wherein the compressive residual stresses of each of the first and second crack retarding regions are largest along the direction of the longitudinal extension.

12. Method for reducing crack growth in a skin of an aircraft, the method comprising the steps:
providing an aircraft comprising a first frame or rib, a second frame or rib, and a skin attached to the first and second frame or rib (S1);
inducing a first crack retarding region comprising compressive residual stresses in a portion of the skin located between the first and second frame or rib by Laser Shock Peening (S2);
inducing a second crack retarding region comprising compressive residual stresses in the portion of the skin located between the first and second frame or rib by Laser Shock Peening (S3);
wherein each of the first and second crack retarding regions has a longitudinal extension; and
wherein the compressive residual stresses of each of the first and second crack retarding regions are largest along the direction of the longitudinal extension.

13. The method according to claim 12,
wherein the parameters for the Laser Shock Peening are selected from the group consisting of a laser power density amounting to 0.5 GW/cm² to 15 GW/cm², a laser pulse duration amounting to 5 ns to 30 ns, 1 to 10 layers of Laser Shock Peening treatment, and any combination thereof.

14. The method according to any one claims 12 or 13;
wherein the compressive residual stresses (306, 308, 326) in each of the first and second crack retarding regions (214, 215) amount to 50 MPa to 1700 MPa.

15. The method according to claim 12,
wherein shot peening parameters for treating the first and second region are selected from the group consisting of blasting agents having a cross section of 0.1 mm to 2 mm, a peening intensity amounting to 0.2 mmA to 0.35 mmA, and any combination thereof.

## Patentansprüche

1. Flugzeug (500) mit zwei benachbarten Spanten oder Rippen (202, 204); einer Haut (203) des Flugzeugs, die an den beiden benachbarten Spanten oder Rippen befestigt ist; wobei ein Abschnitt (205) der Haut zwischen den beiden benachbarten Spanten oder Rippen angeordnet ist und einen ersten rissverzögernden Bereich (214) und einen zweiten rissverzögernden Bereich (215) aufweist, die voneinander getrennt sind; wobei jeder der ersten und zweiten rissverzögernden Bereiche (214, 215) durch Laser-Stoßhämmern induziert ist und Druckeigenspannungen (306, 308, 326) aufweist **dadurch gekennzeichnet, dass**
jeder der ersten und zweiten rissverzögernden Bereiche eine Längserstreckung aufweist; und wobei die Druckeigenspannungen von jedem der ersten und zweiten rissverzögernden Bereiche entlang der Richtung der Längserstreckung am größten sind.

2. Flugzeug (500) nach einem der vorhergehenden Ansprüche, wobei jeder der ersten und zweiten rissverzögernden Bereiche (214, 215) durch Laser-Stoßverfestigungsstrahlen von einer Innenseite (305) und von einer Außenseite (303) der Flugzeughaut induziert wird.

3. Flugzeug (500) nach einem der vorhergehenden Ansprüche, wobei die Druckeigenspannungen (306, 308, 326) in dem ersten und zweiten rissverzögernden Bereich (214, 215) durch die gesamte Dicke der Flugzeughaut reichen.

4. Flugzeug (500) nach einem der vorhergehenden Ansprüche, wobei der erste und der zweite Bereich durch Kugelstrahlen weiter behandelt werden.

5. Das Flugzeug (500) nach einem der vorhergehenden Ansprüche, wobei der erste und der zweite separate rissverzögernde Bereich (214, 215) als erster und zweiter paralleler Streifen ausgebildet sind.

6. Flugzeug (500) nach Anspruch 5, wobei der erste und der zweite Streifen (214, 215) eine Breite zwischen 5 mm und 25 mm oder zwischen 25 mm und 60 mm, vorzugsweise zwischen 8 mm und 22 mm oder zwischen 28 mm und 55 mm, besonders bevorzugt eine Breite von 10 mm, 20 mm, 35 mm oder 50 mm aufweisen; und wobei der erste und der zweite Streifen (214, 215) einen Abstand zwischen 10 mm und 100 mm, vorzugsweise zwischen 15 mm und 50 mm, besonders bevorzugt einen Abstand von 20 mm aufweisen.

7. Flugzeug (500) nach einem der vorangehenden Ansprüche, wobei das Flugzeug ferner umfasst: zwei benachbarte Stringer (206, 208);wobei der Abschnitt der Haut (205) ferner zwischen den beiden benachbarten Stringern angeordnet ist; wobei der Abschnitt der Haut ferner einen dritten rissverzögernden Bereich (211) und einen vierten rissverzögernden Bereich (212) umfasst, die voneinander getrennt sind; wobei sowohl der dritte als auch der vierte rissverzögernde Bereich durch Laser-Stoßhämmern induziert wird und Druckeigenspannungen aufweist; und wobei der erste und der zweite rissverzögernde Bereich (214, 215) so ausgerichtet sind, dass sie parallel zu den beiden benachbarten Rahmen oder Rippen (202, 204) sind, und der dritte und der vierte rissverzögernde Bereich (211, 212) so ausgerichtet sind, dass sie parallel zu den beiden benachbarten Stringern sind.

8. Das Flugzeug (500) nach einem der vorhergehenden Ansprüche, wobei die Haut (203) des Flugzeugs eine Legierungshaut ist.

9. Flugzeug (500) nach einem der vorangehenden Ansprüche, wobei die Dicke der Haut 1 mm bis 20 mm, vorzugsweise 1 bis 3 mm, besonders bevorzugt 2 mm, beträgt.

10. Flugzeug (500) nach einem der vorhergehenden Ansprüche, wobei die beiden Spanten (501, 502) von einem Rumpf (513) des Flugzeugs gebildet werden; oder wobei die beiden Rippen (507, 508) von einem Flügel (515) des Flugzeugs gebildet werden.

11. Verwendung des Laserschockstrahlens zur Behandlung einer Haut (203) eines Flugzeugs (500) zur Verringerung des Risswachstums in der Haut des Flugzeugs, wobei das Flugzeug zwei benachbarte Spanten oder Rippen (202, 204) und eine an den beiden benachbarten Spanten oder Rippen befestigte Haut (203) umfasst; wobei ein Teil (205) der Flugzeughaut (203) zwischen den beiden benachbarten Spanten oder Rippen (202, 204) angeordnet ist und einen ersten rissverzögernden Bereich (214) und einen zweiten rissverzögernden Bereich (215) umfasst, die voneinander getrennt sind; wobei sowohl der erste als auch der zweite rissverzögernde Bereich (214, 215) durch Laser-Stoßverfestigung induziert wird und Druckeigenspannungen (306, 308, 326) aufweist; wobei sowohl der erste als auch der zweite rissverzögernde Bereich eine Längserstreckung aufweist; und wobei die Druckeigenspannungen sowohl des ersten als auch des zweiten rissverzögernden Bereichs entlang der Richtung der Längserstreckung am größten sind.

12. Verfahren zum Verringern des Risswachstums in einer Haut eines Flugzeugs, wobei das Verfahren die folgenden Schritte umfasst: Bereitstellen eines Flugzeugs, das einen ersten Rahmen oder eine erste Rippe, einen zweiten Rahmen oder eine zweite Rippe und eine Haut umfasst, die an dem ersten und dem zweiten Rahmen oder der ersten und der zweiten Rippe (S1) angebracht ist;Induzieren eines ersten rissverzögernden Bereichs, der Druckrestspannungen umfasst, in einem Abschnitt der Haut, der sich zwischen dem ersten und dem zweiten Rahmen oder der ersten und der zweiten Rippe befindet, durch Laser-Stoßverfestigungsstrahlen (S2);
Induzieren eines zweiten rissverzögernden Bereichs, der kompressive Restspannungen umfasst, in dem Abschnitt der Haut, der sich zwischen dem ersten und dem zweiten Rahmen oder der zweiten Rippe befindet, durch Laser-Stoßverfestigungsstrahlen (S3); wobei jeder der ersten und zweiten rissverzögernden Bereiche eine Längserstreckung aufweist; und wobei die kompressiven Restspannungen jedes der ersten und zweiten rissverzögernden Bereiche entlang der Richtung der Längserstreckung am größten sind.

13. Verfahren nach Anspruch 12, wobei die Parameter für das Laser-Stoßverfestigungsstrahlen aus der Gruppe ausgewählt sind, die aus einer Laserleistungsdichte in Höhe von 0,5 GW/cm2 bis 15 GW/cm2, einer Laserpulsdauer in Höhe von 5 ns bis 30 ns, 1 bis 10 Schichten der Laser-Stoßverfestigungsbehandlung und einer beliebigen Kombination davon besteht.

14. Verfahren nach einem der Ansprüche 12 oder 13, wobei die Druckeigenspannungen (306, 308, 326) in jedem der ersten und zweiten rissverzögernden Bereiche (214, 215) 50 MPa bis 1700 MPa betragen.

15. Verfahren nach Anspruch 12, wobei die Parameter des Kugelstrahlens zur Behandlung des ersten und zweiten Bereichs aus der Gruppe ausgewählt sind, die aus Strahlmitteln mit einem Querschnitt von 0,1 mm bis 2 mm, einer Strahlintensität, die 0,2 mmA bis 0,35 mmA beträgt, und einer beliebigen Kombination davon besteht.

## Revendications

1. Aéronef (500), comprenant deux cadres ou nervures adjacents (202, 204) ; un revêtement (203) de l'aéronef fixé aux deux cadres ou nervures adjacents ; dans lequel une partie (205) du revêtement est située entre les deux cadres ou nervures adjacents et comprend une première région de retardement de fissures (214) et une seconde région de retardement de fissures (215) qui sont séparées l'une de l'autre ; dans lequel chacune des première et seconde régions de retardement de fissures (214, 215) est induite par le grenaillage de choc au laser et comprend des contraintes résiduelles de compression (306, 308, 326) ;
**caractérisé en ce que**
chacune des première et seconde régions de retardement de fissures a une extension longitudinale ; et dans lequel les contraintes résiduelles de compression de chacune des première et seconde régions de retardement de fissures sont les plus importantes dans la direction de l'extension longitudinale.

2. Aéronef (500) selon l'une quelconque des revendications précédentes, dans lequel chacune des première et deuxième régions de retardement de fissures (214, 215) est induite par un grenaillage par chocs au laser à partir d'un côté intérieur (305) et d'un côté extérieur (303) du revêtement de l'aéronef.

3. Aéronef (500) selon l'une quelconque des revendications précédentes, dans lequel les contraintes résiduelles de compression (306, 308, 326) dans la première et la deuxième région de retardement de fissures (214, 215) atteignent toute l'épaisseur du revêtement de l'aéronef.

4. Aéronef (500) selon l'une quelconque des revendications précédentes, dans lequel la première et la deuxième région sont en outre traitées par grenaillage.

5. L'aéronef (500) selon l'une quelconque des revendications précédentes, dans lequel les première et deuxième régions distinctes de retardement de fissures (214, 215) sont configurées comme des première et deuxième bandes parallèles.

6. Aéronef (500) selon la revendication 5,dans lequel les première et seconde bandes (214, 215) ont une largeur comprise entre 5 mm et 25 mm ou entre 25 mm et 60 mm, de préférence entre 8 mm et 22 mm ou entre 28 mm et 55 mm, plus préférablement les première et seconde bandes ont une largeur de 10 mm, 20 mm, 35 mm ou 50 mm ; et dans lequel les première et seconde bandes (214, 215) ont une distance comprise entre 10 mm et 100 mm, de préférence entre 15 mm et 50 mm, plus préférablement les première et seconde bandes ont une distance de 20 mm.

7. Aéronef (500) selon l'une quelconque des revendications précédentes, l'aéronef comprenant en outre : deux longerons adjacents (206, 208) ;dans lequel la partie de la peau (205) est en outre située entre les deux longerons adjacents ; dans lequel la partie de la peau comprend en outre une troisième région de retardement de fissures (211) et une quatrième région de retardement de fissures (212) qui sont séparées l'une de l'autre ; dans lequel chacune des troisième et quatrième régions de retardement de fissures est induite par un grenaillage de choc au laser et comprend des contraintes résiduelles de compression ; et dans lequel les première et deuxième régions de retardement de fissures (214, 215) sont alignées pour être parallèles aux deux cadres ou nervures adjacents (202, 204) et les troisième et quatrième régions de retardement de fissures (211, 212) sont alignées pour être parallèles aux deux longerons adjacents.

8. Aéronef (500) selon l'une quelconque des revendications précédentes, dans lequel le revêtement (203) de l'aéronef est un revêtement en alliage.

9. L'aéronef (500) selon l'une quelconque des revendications précédentes, dans lequel l'épaisseur de la peau est comprise entre 1 mm et 20 mm, de préférence entre 1 et 3 mm, plus préférentiellement entre 2 mm.

10. Aéronef (500) selon l'une quelconque des revendications précédentes, dans lequel les deux cadres (501, 502) sont constitués par un fuselage (513) de l'aéronef ; ou dans lequel les deux nervures (507, 508) sont constituées par une aile (515) de l'aéronef.

11. Utilisation du grenaillage de choc au laser pour traiter une peau (203) d'un aéronef (500) afin de réduire la croissance des fissures dans la peau de l'aéronef, dans laquelle l'aéronef comprend deux cadres ou nervures adjacents (202, 204) et une peau (203) fixée aux deux cadres ou nervures adjacents; dans laquelle une partie (205) de la peau de l'aéronef (203) est située entre les deux cadres ou nervures adjacents (202, 204) et comprend une première région de retardement des fissures (214) et une seconde région de retardement des fissures (215) qui sont séparées l'une de l'autre ; dans lequel chacune des première et seconde régions de retardement de fissures (214, 215) est induite par un grenaillage de choc au laser et comprend des contraintes résiduelles de compression (306, 308, 326) ; dans lequel chacune des première et seconde régions de retardement de fissures a une extension longitudinale ; et dans lequel les contraintes résiduelles de compression de chacune des première et seconde régions de retardement de fissures sont les plus grandes dans la direction de l'extension longitudinale.

12. Procédé pour réduire la croissance des fissures dans un revêtement d'un aéronef, le procédé comprenant les étapes consistant à : fournir un aéronef comprenant un premier cadre ou une première nervure, un second cadre ou une seconde nervure, et un revêtement fixé au premier et au second cadre ou à la première nervure (S1) ;induire une première région de retardement des fissures comprenant des contraintes résiduelles de compression dans une partie du revêtement située entre le premier et le second cadre ou la première nervure par martelage par chocs au laser (S2) ;
induire une deuxième région de retardement de fissures comprenant des contraintes résiduelles de compression dans la partie de la peau située entre le premier et le deuxième cadre ou nervure par grenaillage par chocs au laser (S3) ; dans lequel chacune des première et deuxième régions de retardement de fissures a une extension longitudinale ; et dans lequel les contraintes résiduelles de compression de chacune des première et deuxième régions de retardement de fissures sont les plus grandes dans la direction de l'extension longitudinale.

13. Procédé selon la revendication 12, dans lequel les paramètres pour le grenaillage par chocs au laser sont choisis dans le groupe constitué d'une densité de puissance laser s'élevant de 0,5 GW/cm2 à 15 GW/cm2, d'une durée d'impulsion laser s'élevant de 5 ns à 30 ns, de 1 à 10 couches de traitement de grenaillage par chocs au laser, et de toute combinaison de ceux-ci.

14. Procédé selon l'une quelconque des revendications 12 ou 13 ; dans lequel les contraintes résiduelles de compression (306, 308, 326) dans chacune des première et deuxième régions de retardement de fissures (214, 215) s'élèvent à 50 MPa à 1700 MPa.

15. Procédé selon la revendication 12, dans lequel les paramètres de grenaillage de précontrainte pour traiter la première et la deuxième région sont choisis dans le groupe constitué par des agents de grenaillage ayant une section transversale de 0,1 mm à 2 mm, une intensité de grenaillage s'élevant à 0,2 mmA à 0,35 mmA, et toute combinaison de ceux-ci.
